# EUROPEAN PATENT APPLICATION

(11) **EP 4 293 963 A1**
(43) Date of publication of application: **20.12.2023**
(21) Application number: 23163777.8
(22) Date of filing: 23.03.2023
(51) Int. Cl.: H04L 9/40, H04W 12/03, H04W 12/04

(54) **SECURE MEDIUM ACCESS CONTROL (MAC) HEADER**

(30) Priority: 15.06.2022 US 202263352495 P
(71) Applicant: INTEL Corporation, Santa Clara, CA 95054 (US)
(72) Inventor: BRAVO, Daniel, Portland, 97229 (US); OUZIELI, Ido, 6382732 Tel Aviv (IL); HUANG, Po-Kai, San Jose, 95131 (US); PEER, Ilan, 71721 Modiin (IL); ALEXANDER, Danny, Neve Efraim Monoson (IL); BERG, Johannes, 32760 Detmold (DE)
(74) Representative: Viering, Jentschura & Partner mbB Patent- und Rechtsanwälte

(57) **Abstract**

This disclosure describes systems, methods, and devices related to secure medium access control (MAC) header. A device may generate a frame comprising one or more fields that are encrypted using a second encryption key different from a first encryption key used in a frame body of a data frame or a management frame. The device may cause to send the frame to one or more station devices (STAs).

## Description

### TECHNICAL FIELD

This disclosure generally relates to systems and methods for wireless communications and, more particularly, to secure medium access control (MAC) header.

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

### BRIEF DESCRIPTION OF THE DRAWINGS

FIG. 1 is a network diagram illustrating an example network environment for secure MAC header, in accordance with one or more example embodiments of the present disclosure.
FIG. 2A illustrates an example of an expanded CCMP MPDU.
FIG. 2B illustrates an example of an expanded GCMP MPDU.
FIG.3A illustrates an example of a format of Data frame.
FIG. 3B illustrates an example of a format of a management frame.
FIG. 3C shows an illustration of a QoS control field.
FIG. 4A illustrates an example of a Data frame format.
FIG. 4B illustrates an example of a management frame format.
FIG. 4C shows an illustration of a Quality of Service (QoS) control field.
FIG. 5 depicts an illustrative schematic diagram for multi-link device (MLD) communications between two logical entities.
FIG. 6 depicts an illustrative schematic diagram for multi-link device (MLD) communications between two logical entities.
FIG. 7 shows an exemplary illustration of a mechanism involving an external key-holder.
FIG. 8 shows an example of a frame in accordance with various aspects provided herein.
FIG. 9 shows an example with GCMP for MAC header encryption for QoS Null.
FIG. 10 shows an exemplary header for encryption with header encryption key field in accordance with various aspects provided herein.
FIG. 11 shows an example of an encrypted MAC header field.
FIG. 12 illustrates a flow diagram of illustrative process for an illustrative secure MAC header system, in accordance with one or more example embodiments of the present disclosure.
FIG. 13 illustrates a functional diagram of an exemplary communication station that may be suitable for use as a user device, in accordance with one or more example embodiments of the present disclosure.
FIG. 14 illustrates a block diagram of an example machine upon which any of one or more techniques (e.g., methods) may be performed, in accordance with one or more example embodiments of the present disclosure.
FIG. 15 is a block diagram of a radio architecture in accordance with some examples.
FIG. 16 illustrates an example front-end module circuitry for use in the radio architecture of FIG. 15, in accordance with one or more example embodiments of the present disclosure.
FIG. 17 illustrates an example radio IC circuitry for use in the radio architecture of FIG. 15, in accordance with one or more example embodiments of the present disclosure.
FIG. 18 illustrates an example baseband processing circuitry for use in the radio architecture of FIG. 15, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

It has been discussed that various fields in medium access control (MAC) header that are not part of the additional authentication data (AAD) construction may suffer security attack Sequence number field may be modified by the attacker to disrupt the acknowledgement and data reception procedure high-throughput (HT) control field may be modified by the attacker to disrupt various features relying on HT control such as Operating Mode.

Power management/More data/end of service period (EOSP) bit may be modified to disrupt the power save mechanism. Note that the above problems may be considered as some kinds of denial of service attack. Wireless transmission may still be possible, but the quality of wireless transmission maybe seriously affected by the attack.

It has also been discussed that various fields in MAC header like sequence number (SN)/packet number (PN)/HT Control/power management (PM)/More Data/EOSP/traffic identifier (TID) may be tracked and lead to privacy issues. The reason is that these fields are sent in clear and are only part of AAD if not masked rather than encryption.

Example embodiments of the present disclosure relate to systems, methods, and devices for secure MAC header.

In one or more embodiments, it is proposed to encrypt various MAC header fields using an additional key that is different from the key that is used to current the current data and management frame.

Fields like SN/TID/PM/More Data/EOSP/HT Control can be encrypted with the additional key.

The additional key can be maintained in lower layer, so if reencryption is needed, then the lower layer can handle the reencryption rather than passing up to higher layer like external key holder to reencrypt.

Security and privacy problem of certain MAC header fields are then resolved.

Implementation requirement like external key holder will not be violated and can continue to exist.

Values of various MAC headers can change during retransmission and advantages of the fields can be preserved.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

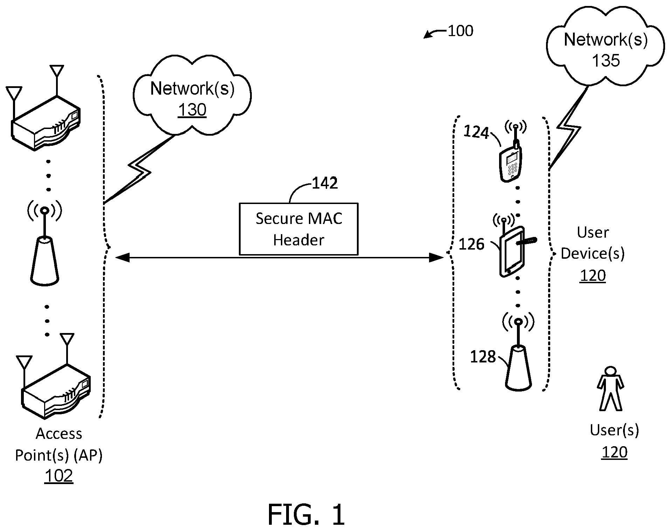

FIG. 1 is a network diagram illustrating an example network environment of secure MAC header, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

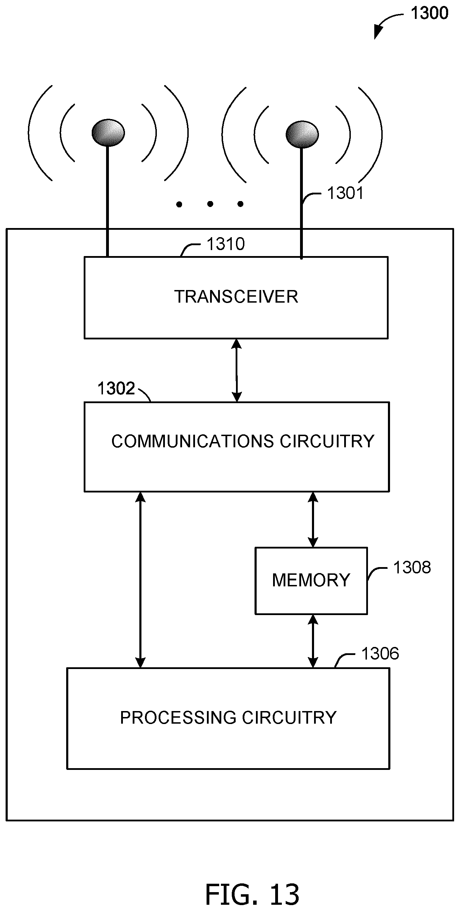

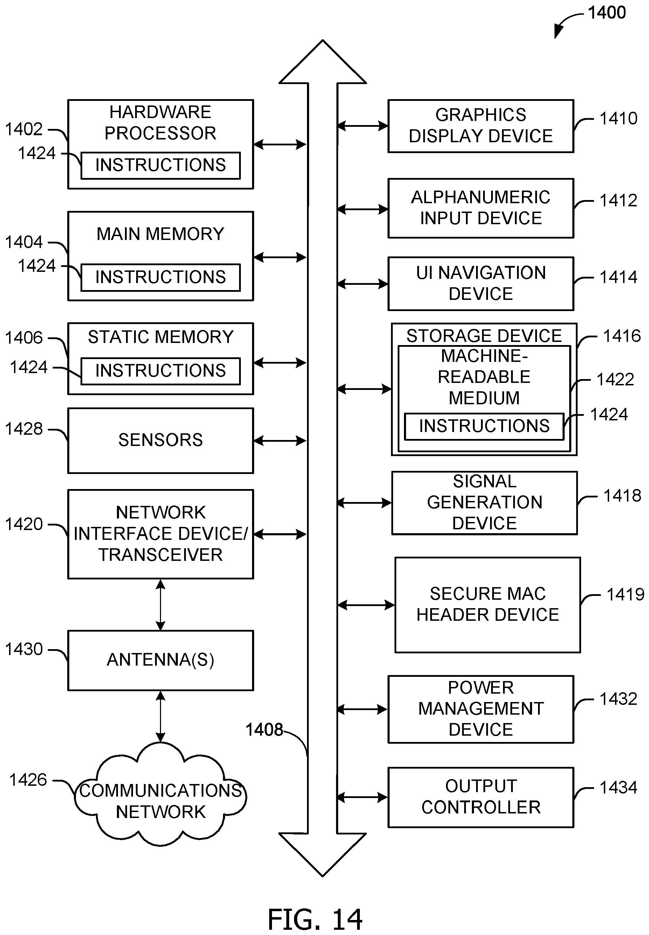

In some embodiments, the user devices 120 and the AP 102 may include one or more computer systems similar to that of the functional diagram of FIG. 13 and/or the example machine/system of FIG. 14.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to preestablished transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, etc.), 6 GHz channels (e.g., 802.11ax, 802.11be, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement a secure MAC header 142 with one or more user devices 120. It is understood that the above descriptions are for purposes of illustration and are not meant to be limiting.

It is understood that the above descriptions are for purposes of illustration and are not meant to be limiting.

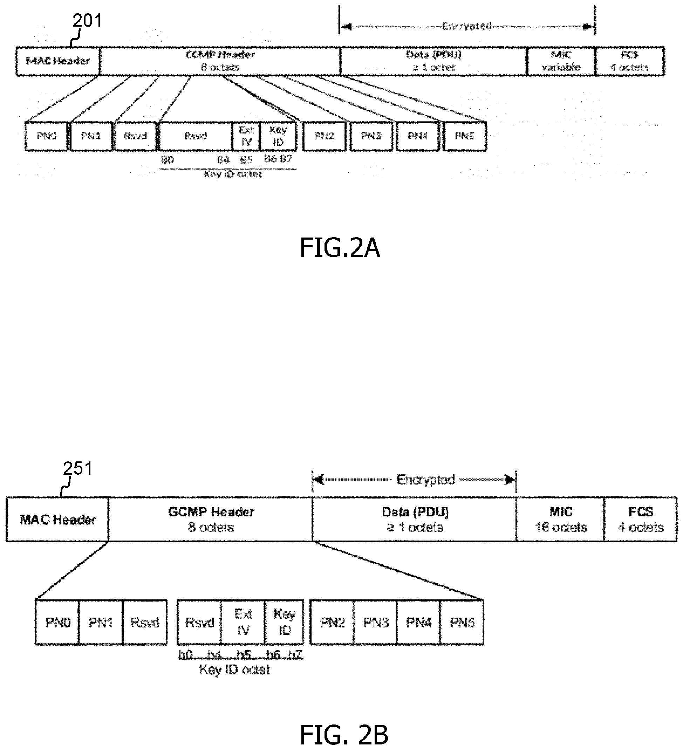

FIG. 2A illustrates an example of an expanded CCMP MPDU. FIG. 2B illustrates an example of an expanded GCMP MPDU. Two types of individual addressed frames (data and management) can be encrypted. When they are encrypted, counter mode (CTR) with cipher-block chaining (CBC)-message authentication code(MAC) protocol (CCMP) or Galois/counter mode (GCM) protocol (GCMP) is used as the encryption algorithm, where the respective formats are provided in FIGs. 2A and 2B.

The MAC headers 201, 251 as shown are not encrypted. However, they are part of the additional authentication data (AAD) and will be protected by message integrity code (MIC).

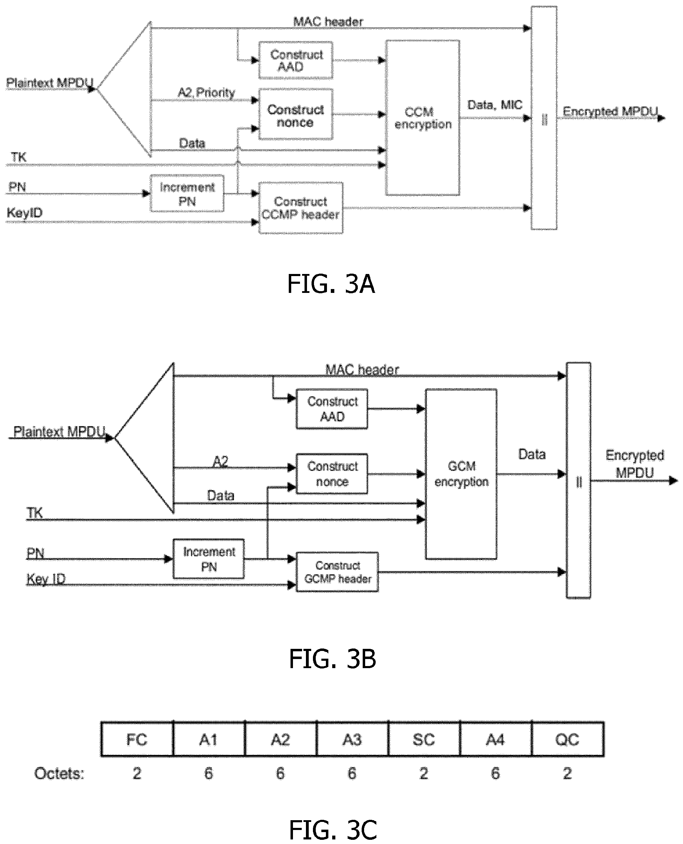

FIG. 3A illustrates an example of an CCMP encapsulation block diagram. FIG. 3B illustrates an example of an GCMP encapsulation block diagram. FIG. 3C illustrates an AAD construction for protocol version 0 (PV0) MPDU.

It is worthwhile to note that not all fields in MAC header will be part of the AAD and some of the fields are actually masked before used to construct AAD.

For CCMP and GCMP, the following fields are masked to 0: i) The 3 least significant bits (LSBs) of the Subtype subfield (bits 4 5 6) in a Data frame masked to 0; ii) Retry subfield (bit 11) masked to 0; iii) Power Management subfield (bit 12) masked to 0; iv) More Data subfield (bit 13) masked to 0; v) +HT Control (HTC) subfield (bit 15) may be masked as follows: - Masked to 0 in all Data frames containing a QoS Control field or Unmasked otherwise; vi) Spatially Correlated(SC) - MAC protocol data unit (MPDU) Sequence Control field, with the Sequence Number subfield (bits 4-15 of the Sequence Control field) masked to 0; vii) The remaining QC fields are not used and are masked to 0 for the AAD calculation (for a non-directional multi-gigabit(DMG) BSS, bits 4 to 6, bits 8 to 15, and bit 7 when either the STA or its peer has the signaling and payload protected aggregate MAC service data unit (SPP A-MSDU) Capable field equal to 0; viii) HT control may be masked to 0.

Fields are muted because those fields may change during data retransmission. When fields value change, a new PN is typically required, but doing this may complicate the reordering operation at a later stage. As a result, these fields are muted to prevent reassigning of PN. Fields are also muted to avoid reencryption, which may complicate the requirement of external key holder.

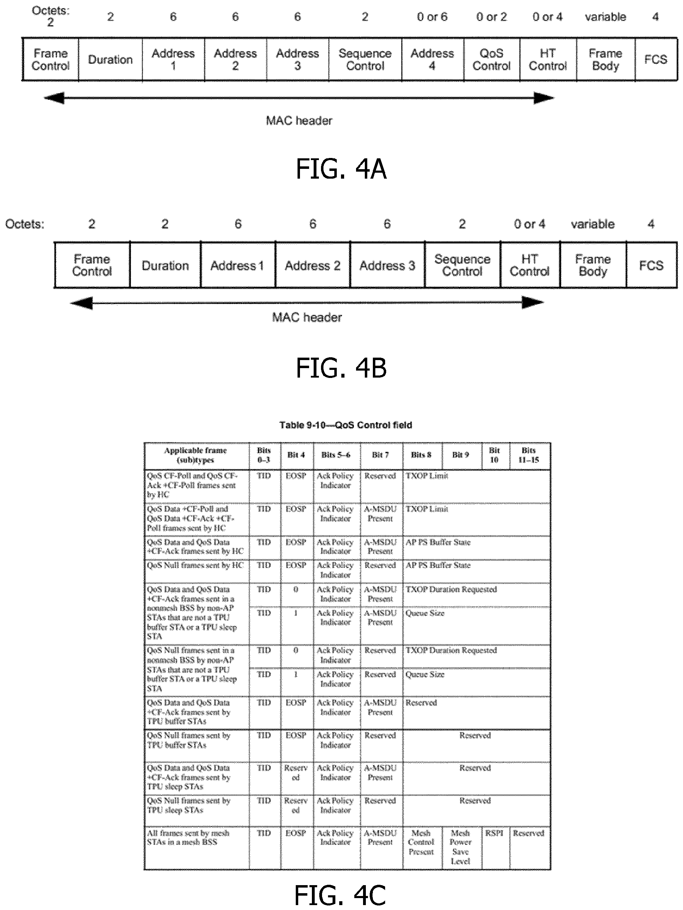

FIG.4A illustrates an example of a format of Data frame. FIG. 4B illustrates an example of a format of a management frame. FIG. 4C shows an illustration of a Quality of Service (QoS) control field.

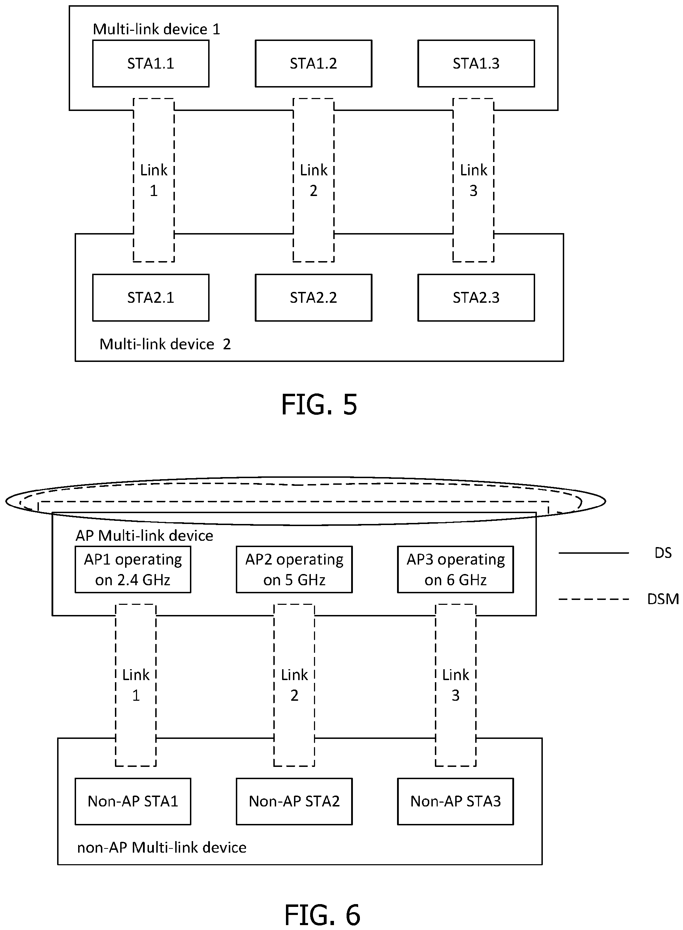

The following framework has been agreed. There are two multi-link devices on either side which includes multiple STAs that can setup link with each other. The detailed definition is illustrated in FIGs. 5 and 6.

Multi-link device (MLD): A logical entity that contains one or more STAs. The logical entity has one MAC data service interface and primitives to the logical link control (LLC) and a single address associated with the interface, which can be used to communicate on the distribution system medium (DSM). It is to be noted that a Multi-link device allows STAs within the multi-link logical entity to have the same MAC address. It is also to be noted that the exact name can be changed.

For infrastructure framework, there is a Multi-link AP device, which includes APs on one side, and Multi-link non-AP device, which includes non-APs on the other side. The detailed definition is shown below.

Multi-link AP device (AP MLD): A multi-link device, where each STA within the multi-link device is an extremely high-throughput (EHT) AP.

Multi-link non-AP device (non-AP MLD): A multi-link device, where each STA within the multi-link device is a non-AP EHT STA.

FIG. 5 depicts an illustrative schematic diagram for multi-link device (MLD) communications between two logical entities, namely between MLD 1 and MLD 2. FIG. 6 depicts an illustrative schematic diagram for multi-link device (MLD) communications between two logical entities, namely between an AP MLD and a non-AP MLD. Note that this framework is a natural extension from the one link operation between two STAs, which are AP and non -AP STA under infrastructure framework.

There have been proposals to unmask the fields that are masked in AAD to prevent the potential security attack. There have also been proposals to encrypt certain fields of MAC header to resolve the privacy issue.

Unmasked certain fields in AAD construction may mean that during retransmission, 1) reencryption is then required because fields like PM/HT Control/More Data/EOSP may be changed during retransmission. 2) A new PN assignment is needed. Further, 3) fields like PM/HT Control/More Data/EOSP cannot be changed during retransmission.

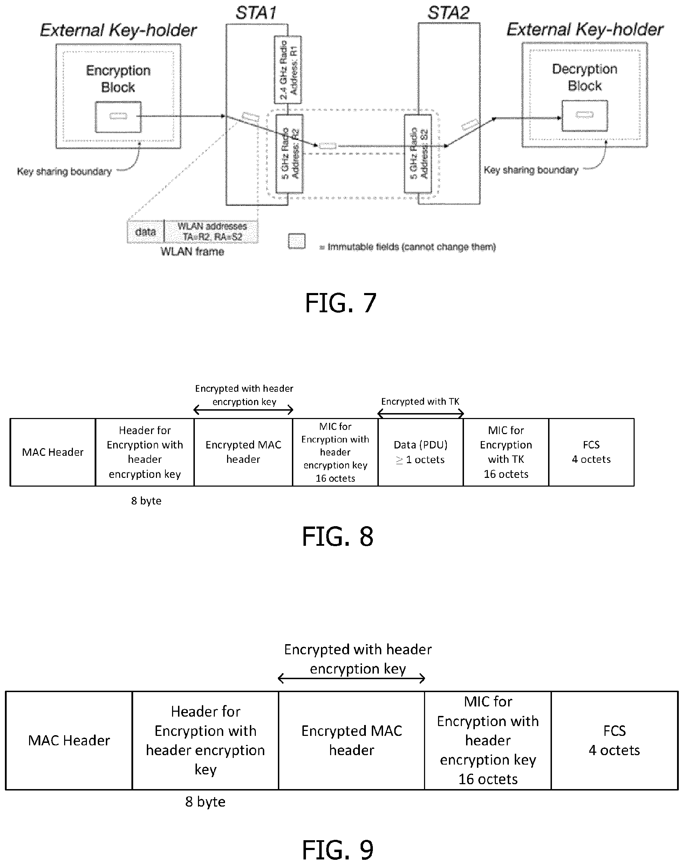

For 1, there are implementation mechanisms like external key holders which encrypts the whole frame in higher layer then push down to local lower layer for transmission may have issues. FIG. 7 shows an exemplary illustration of a mechanism involving an external key-holder.

Essentially, whenever fields like PM/HT Control changes, then the frame needs to be passed to upper layer for reencryption and then passed down again.

Encryption of certain fields of the MAC header using existing negotiated key for data or management frame encryption violates the implementation of external key holder as well.

For 2, changing MAC header while using the same key and PN to encrypt creates security problems because same nonce is used for different encryption content. Assigning a PN complicates the following reordering and replay check mechanism. , the mapping mechanism may be defined for PN for encryption with TK.

For 3, not changing the value of certain fields may sacrifice the advantage of certain fields like PM, More data, and HT Control.

The main proposal is to negotiate additional header encryption key between two Wi-Fi Devices, which can be two multi-link devices or two STAs.

The length of the key will be the same as the temporal key (TK), which is used to encrypt data and management frame body.

The cipher used to do the encryption can be same as the cipher used to do encryption based on TK, which can be CCMP or GCMP. The cipher can be mandated to be GCMP. The cipher can be GCMP or CCMP independent of the cipher used for data encryption. Cipher suite indication will be negotiated separately in additional element. Other ciphers defined additionally for MAC header encryption.

For multi-link operation, negotiate additional key for each link. This may be needed so there is no need to coordinate transmission across links. In aspects provided herein: AA referring to authenticator address, SPA referring to supplicant address, ANonce referring to authenticator nonce, SNonce referring to supplicant nonce, KDF referring to key derivation function.

For each link, the key generation function can use key derivation key (KDK) and have Min(AA,SPA), Max(AA,SPA), Min(ANonce,SNonce), Max(ANonce,SNonce), and link ID as input.

Additional random Nonce may be included to have independent rekeying from PTKSA.

One example is as follows: KDF-Hash-Length(KDK, "MAC Header Temporal Key", Min(AA,SPA) ∥ Max(AA,SPA) ∥ Min(ANonce,SNonce) ∥ Max(ANonce,SNonce ∥ link ID ).

For each new negotiated key, there is an additional packet number for the new negotiated key for each direction transmission, this is described as PN for MAC header encryption.

Note that for multi-link operation (MLO), there will be separate PN in each link and each direction, since there is separate negotiated key. For example, referring to FIGs 5-6, in link 1, there is PN for uplink and PN for downlink. For non-MLO, there will be PN for transmission from Wi-Fi device 1 to Wi-Fi device 2 and PN for transmission from Wi-Fi device 2 to Wi-Fi device 1.

For each new negotiated key, on the receiver side, there is one separate replay counter to check replay and drop any frame with PN for MAC header encryption that is smaller than or equal to the replay counter.

On the receiver side update replay counter to the received PN for MAC header encryption when the frame passes FCS check, MAC header encryption MIC check and MAC header encryption replay check.

The PN for MAC header encryption will always be incremented for each additional transmitted frame regardless of retransmission. This is to prevent out of order problem which cause problems on replay check

The PN can have 48 bits or larger size than 48 bits to ensure PN exhaustion will be slower than the PN of data encryption. For size larger than 48 bits, the size will be smaller than or equal to 56 bits

For the PN for MAC header encryption, there may be privacy issue as well.

For the rekey of the new negotiated key: the rekey of the new negotiated key can be independent of the rekey for the TK. The rekey of the new negotiated key can be together with the rekey of pairwise transient key security association (PTKSA) and be done by the existing PTKSA rekeying procedure as follows:
An Authenticator may initiate a 4-way handshake for the purpose of renewing the key associated with a PTKSA. A Supplicant may send an extensible authentication protocol over local area network (EAPOL) request message to the Authenticator to request rekeying.

Optional methods using key ID can be done as follows: i) Key ID can be value 0 or 1; ii) Key ID can be value 2 or 3; iii) Having key ID independent of the Key ID implementation of encryption with TK; or iv) Having key ID dependent of the Key ID implementation of encryption with TK and sync the key ID. If TK has key ID 0, then MAC header encryption key has key ID 0 (or 2 for alternative). If TK is has key ID 1, then MAC header encryption key has key ID 1 (or 3 for alternative).

When both ends of the link support extended Key IDs for individually addressed frames, it is possible to install the new MAC header encryption key without data loss, provided the new MAC header encryption key uses a different Key ID from the old MAC header encryption key. Data loss might occur if the same Key ID is used because it is not possible to precisely coordinate (due to software processing delays) when the new key is used for transmit at one end and when it is applied to receive at the other end. If a different Key ID is used for the new MAC header encryption key, then provided the new key is installed at the receive side prior to its first use at the transmit side there is no need for precise coordination. During the transition, received packets are unambiguously identified using the Key ID as belonging to either the old or new MAC header encryption key.

For the key installation: After association, install the key(s) for MAC header encryption for transmission whenever the TK is installed for encryption under transmission. After association, install the key(s) for MAC header encryption for reception whenever the TK is installed for decryption under reception. For rekeying, then following the key installation procedure for TK. Although procedure is the same, installation timing maybe together with new TK or separate.

The key will be used to have encrypted MAC header and the detailed format is described below:
Both Wi-Fi devices will know the new format is used if both sides support this secure MAC header feature.

One capability bit can be used for this purpose.

The capability bit can be in robust security network extension element (RSNXE) or the capability bit element defined in IEEE 802.11bi.

For multi-link operation, each STA can have one capability bit and all affiliated STAs of the MLD will set the capability bit to the same value to indicate support (value 1) or no support (value 0).

The feature can be limited to just individual addressed frame, i.e., A1 field is individually addressed.

Format of the frame will be the following:
MAC header.
Header for Encryption with header encryption key.
Encrypted MAC header.
MIC for encryption with header encryption key.
Encrypted Data field (not present under QoS Null).
MIC for encryption with TK (not present under QoS Null).

FIG. 8 shows an example of a frame in accordance with various aspects provided herein. In particular, an example with GCMP for MAC header encryption and GCMP for data encryption for data or management frame with frame body is provided in FIG. 8.

FIG. 9 shows an example with GCMP for MAC header encryption for QoS Null.

The intended receiver can parse the format because the receiver knows the length of the MAC header, knows the length of the header for encryption with header encryption key, knows the length of encrypted MAC header and knows the length of MIC for encryption with header encryption key.

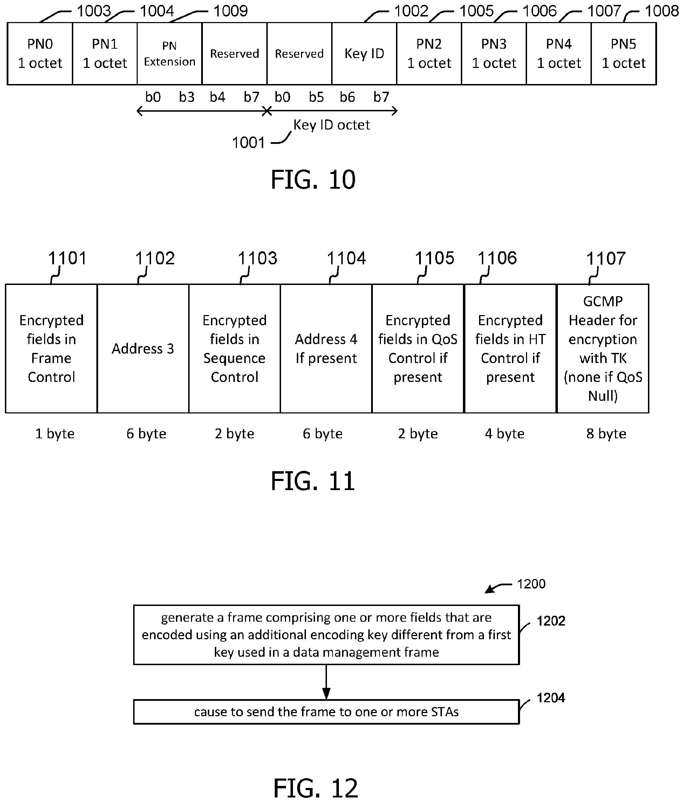

FIG. 10 shows an exemplary header for encryption with header encryption key field in accordance with various aspects provided herein. The Header for encryption with header encryption key is described as follows:

The Header for encryption with header encryption key can be 8 octets.

One octet is Key ID 1001 octet with 2 bits of Key ID 1002. Note that there is no need extended IV (extIV) seems there is no extension of initialization vector (IV) like wired equivalent privacy (WEP).

6 bytes will be PN0 1003, PN1 1004, PN2 1005, PN3 1006, PN4 1007, PN5 1008.

IfPN extension 1009 is needed then one byte will have extended bits with remaining to be reserved bits.

FIG. 11 shows an example of a format of an encrypted MAC header field. The format of the encrypted MAC header is described as follows:

Encrypted MAC header includes fields in MAC header that needs protection. The potential field can include the following that may have privacy or security issues.

The encrypted fields in Frame control 1101, which can include the following: PM bit. More data bit. +HTC bit. Retry bit.

Address 3 field 1102: This is useful if Address 3 field is SA or DA. Address 3 field 1102 can be present if Address 3 is present in original MAC header. Or if Address 3 is SA or DA, then address 3 is present in encrypted MAC header. Otherwise, omit this field in encrypted MAC header. Receiver can reconstruct A3 to be used for data encryption. One bit in Frame Control that is included in encrypted Frame control can be used to indicate whether Address 3 is present in encrypted MAC header.

The encrypted fields in Sequence Control 1103, which can include: - Sequence Number subfield. -Fragment Number subfield. -Or the entire Sequence Control field.

Address 4 field 1104: Can be present if Address 4 is present in original MAC header. Or if Address 4 is SA or DA, then address 4 is present in encrypted MAC header. Otherwise, omit this field in encrypted MAC header. Receiver can reconstruct A4 to be used for data encryption by using BSSID. One bit in Frame Control that is included in encrypted Frame control can be used to indicate whether Address 4 is present in encrypted MAC header.

The encrypted fields in QoS Control 1105, which can include: -TID. -EOSP. -Or the entire QoS Control field if present (not present in management frame).

The encrypted fields in HT Control 1106, which can include the entire HT Control field if present (not present when +HTC field is set to 0). The CCMP or GCMP header for encryption with TK 1107 when data encryption with TK using CCMP or GCMP. This may resolve the PN privacy issue.

The MAC header format for MAC header encryption is described as follows:

Bits or Fields in MAC header that are included in encrypted MAC header can be removed or set to 0.

Remove the fields in MAC header can have reduced MAC header and save overhead.

Fields like frame control, duration, address 1, address 2, address 3, address 4, Sequence control, QoS control, HT control can be removed.

Bits in Frame control that are included in Encrypted MAC header will be set to 0 except +HTC, which is used to indicate whether HT control is included or not in encrypted MAC header.

A proposal can be generic for any MAC header format defined today or to be defined in the future. Simply saying which fields will be removed to save overhead when MAC header encryption is used.

MAC header format does not need to change when MAC header encryption is not used.

Frame control can also indicate whether the new format is used or not. Bits that are included in encrypted MAC header can be reused for this purpose, such as Ex PM or More data bit.

A new protocol version indicated in protocol version field of Frame control can be defined for this purpose.

Referring to FIGs. 4A and 4B in which format of the current data and management frame is provided

The AAD construction for MAC header encryption is described as follows. Fields may include the following for possible options:

Include Frame Control in AAD construction using exact value of frame control transmitted on the air.

Fields that are included in encrypted MAC header if needed to be set to 0 is already set to 0.

Include Address 1 in AAD construction using exact value of A1 transmitted on the air.

Include Address 2 in AAD construction using exact value of A2 transmitted on the air.

Fields like Address 3, Sequence control, Address 4, QoS Control can be removed from AAD construction.

In order to ensure that MAC header encryption portion will be together with right data encryption portion: i) Include encrypted Data field and MIC for encryption with TK; Or ii) Include hash digest of encrypted Data field and MIC for encryption with TK.

The hash algorithm can be the hash algorithm used in key computation, which can be SHA-256, SHA-384, or SHA-512.

The Nonce construction for MAC header encryption is described as follows:

If CCMP cipher is used: i) Include CCM nonce flag as defined in the current 802.11 specification, ii) Include the PN for MAC header encryption. This can be 48 bits or larger than 48 bits and smaller than 56 bits

Option 1: keep total size as 13 bytes. Remaining size can be a random number or the LSB portion of A2 address. If random number, agree based on a defined formula If using LSB portion of A2 address and remaining size X bits, then choose X LSB portion of A2 address.

Option 2: have total size as 14 bytes: -Include A2 address.-Remaining bits after including PN larger than 6 bytes, A2, and CCM nonce flag as reserved.

If GCMP cipher is used:
Include the PN for MAC header encryption.

This can be 48 bits or larger than 48 bits and smaller than 56 bits

Option 1: keep total size as 12 bytes: Remaining size can be a random number or the LSB portion of A2 address. If random number, agree based on a defined formula. If using LSB portion of A2 address and remaining size X bits, then choose X LSB portion of A2 address.

Option 2: have total size as 13 bytes: -Include A2 address -R Remaining bits after including PN larger than 6 bytes and PN as reserved.

FIG. 12 illustrates a flow diagram of illustrative process 1200 for a secure MAC header system, in accordance with one or more example embodiments of the present disclosure.

At block 1202, a device (e.g., the user device(s) 120 and/or the AP 102 of FIG. 1 and/or the secure MAC header device 1419 of FIG. 14) may generate a frame comprising one or more fields that are encoded using an additional encoding key different from a first key used in a data management frame.

At block 1204, the device may cause to send the frame to one or more STAs.

It is understood that the above descriptions are for purposes of illustration and are not meant to be limiting.

FIG. 13 shows a functional diagram of an exemplary communication station 1300, in accordance with one or more example embodiments of the present disclosure. In one embodiment, FIG. 13 illustrates a functional block diagram of a communication station that may be suitable for use as an AP 102 (FIG. 1) or a user device 120 (FIG. 1) in accordance with some embodiments. The communication station 1300 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 1300 may include communications circuitry 1302 and a transceiver 1310 for transmitting and receiving signals to and from other communication stations using one or more antennas 1301. The communications circuitry 1302 may include circuitry that can operate the physical layer (PHY) communications and/or medium access control (MAC) communications for controlling access to the wireless medium, and/or any other communications layers for transmitting and receiving signals. The communication station 1300 may also include processing circuitry 1306 and memory 1308 arranged to perform the operations described herein. In some embodiments, the communications circuitry 1302 and the processing circuitry 1306 may be configured to perform operations detailed in the above figures, diagrams, and flows.

In accordance with some embodiments, the communications circuitry 1302 may be arranged to contend for a wireless medium and configure frames or packets for communicating over the wireless medium. The communications circuitry 1302 may be arranged to transmit and receive signals. The communications circuitry 1302 may also include circuitry for modulation/demodulation, upconversion/downconversion, filtering, amplification, etc. In some embodiments, the processing circuitry 1306 of the communication station 1300 may include one or more processors. In other embodiments, two or more antennas 1301 may be coupled to the communications circuitry 1302 arranged for sending and receiving signals. The memory 1308 may store information for configuring the processing circuitry 1306 to perform operations for configuring and transmitting message frames and performing the various operations described herein. The memory 1308 may include any type of memory, including non-transitory memory, for storing information in a form readable by a machine (e.g., a computer). For example, the memory 1308 may include a computer-readable storage device, read-only memory (ROM), random-access memory (RAM), magnetic disk storage media, optical storage media, flash-memory devices and other storage devices and media.

In some embodiments, the communication station 1300 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 1300 may include one or more antennas 1301. The antennas 1301 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 1300 may include one or more of a keyboard, a display, a non-volatile memory port, multiple antennas, a graphics processor, an application processor, speakers, and other mobile device elements. The display may be an LCD screen including a touch screen.

Although the communication station 1300 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 1300 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 1300 may include one or more processors and may be configured with instructions stored on a computer-readable storage device.

FIG. 14 illustrates a block diagram of an example of a machine 1400 or system upon which any one or more of the techniques (e.g., methodologies) discussed herein may be performed. In other embodiments, the machine 1400 may operate as a standalone device or may be connected (e.g., networked) to other machines. In a networked deployment, the machine 1400 may operate in the capacity of a server machine, a client machine, or both in server-client network environments. In an example, the machine 1400 may act as a peer machine in peer-to-peer (P2P) (or other distributed) network environments. The machine 1400 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 1400 may include a hardware processor 1402 (e.g., a central processing unit (CPU), a graphics processing unit (GPU), a hardware processor core, or any combination thereof), a main memory 1404 and a static memory 1406, some or all of which may communicate with each other via an interlink (e.g., bus) 1408. The machine 1400 may further include a power management device 1432, a graphics display device 1410, an alphanumeric input device 1412 (e.g., a keyboard), and a user interface (UI) navigation device 1414 (e.g., a mouse). In an example, the graphics display device 1410, alphanumeric input device 1412, and UI navigation device 1414 may be a touch screen display. The machine 1400 may additionally include a storage device (i.e., drive unit) 1416, a signal generation device 1418 (e.g., a speaker), a secure MAC header device 1419, a network interface device/transceiver 1420 coupled to antenna(s) 1430, and one or more sensors 1428, such as a global positioning system (GPS) sensor, a compass, an accelerometer, or other sensor. The machine 1400 may include an output controller 1434, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 1402 for generation and processing of the baseband signals and for controlling operations of the main memory 1404, the storage device 1416, and/or the secure MAC header device 1419. The baseband processor may be provided on a single radio card, a single chip, or an integrated circuit (IC).

The storage device 1416 may include a machine readable medium 1422 on which is stored one or more sets of data structures or instructions 1424 (e.g., software) embodying or utilized by any one or more of the techniques or functions described herein. The instructions 1424 may also reside, completely or at least partially, within the main memory 1404, within the static memory 1406, or within the hardware processor 1402 during execution thereof by the machine 1400. In an example, one or any combination of the hardware processor 1402, the main memory 1404, the static memory 1406, or the storage device 1416 may constitute machine-readable media.

The secure MAC header device 1419 may carry out or perform any of the operations and processes (e.g., process 1200) described and shown above.

It is understood that the above are only a subset of what the secure MAC header device 1419 may be configured to perform and that other functions included throughout this disclosure may also be performed by the secure MAC header device 1419.

While the machine-readable medium 1422 is illustrated as a single medium, the term "machine-readable medium" may include a single medium or multiple media (e.g., a centralized or distributed database, and/or associated caches and servers) configured to store the one or more instructions 1424.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 1400 and that cause the machine 1400 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 1424 may further be transmitted or received over a communications network 1426 using a transmission medium via the network interface device/transceiver 1420 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 1420 may include one or more physical jacks (e.g., Ethernet, coaxial, or phone jacks) or one or more antennas to connect to the communications network 1426. In an example, the network interface device/transceiver 1420 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 1400 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

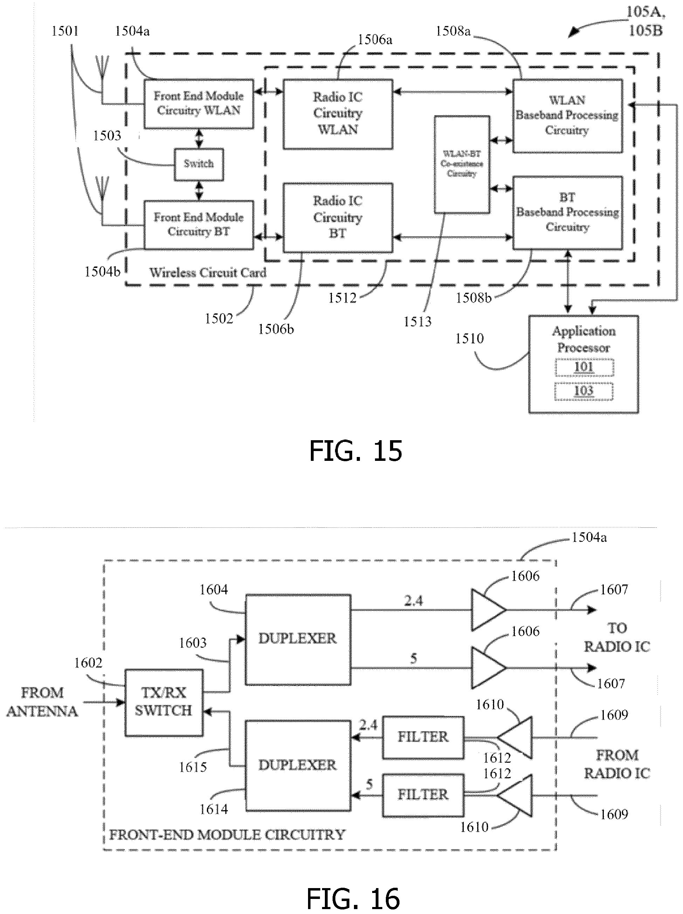

FIG. 15 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 1504a-b, radio IC circuitry 1506a-b and baseband processing circuitry 1508a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 1504a-b may include a WLAN or Wi-Fi FEM circuitry 1504a and a Bluetooth (BT) FEM circuitry 1504b. The WLAN FEM circuitry 1504a may include a receive signal path comprising circuitry configured to operate on WLAN RF signals received from one or more antennas 1501, to amplify the received signals and to provide the amplified versions of the received signals to the WLAN radio IC circuitry 1506a for further processing. The BT FEM circuitry 1504b may include a receive signal path which may include circuitry configured to operate on BT RF signals received from one or more antennas 1501, to amplify the received signals and to provide the amplified versions of the received signals to the BT radio IC circuitry 1506b for further processing. FEM circuitry 1504a may also include a transmit signal path which may include circuitry configured to amplify WLAN signals provided by the radio IC circuitry 1506a for wireless transmission by one or more of the antennas 1501. In addition, FEM circuitry 1504b may also include a transmit signal path which may include circuitry configured to amplify BT signals provided by the radio IC circuitry 1506b for wireless transmission by the one or more antennas. In the embodiment of FIG. 15, although FEM 1504a and FEM 1504b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 1506a-b as shown may include WLAN radio IC circuitry 1506a and BT radio IC circuitry 1506b. The WLAN radio IC circuitry 1506a may include a receive signal path which may include circuitry to down-convert WLAN RF signals received from the FEM circuitry 1504a and provide baseband signals to WLAN baseband processing circuitry 1508a. BT radio IC circuitry 1506b may in turn include a receive signal path which may include circuitry to down-convert BT RF signals received from the FEM circuitry 1504b and provide baseband signals to BT baseband processing circuitry 1508b. WLAN radio IC circuitry 1506a may also include a transmit signal path which may include circuitry to up-convert WLAN baseband signals provided by the WLAN baseband processing circuitry 1508a and provide WLAN RF output signals to the FEM circuitry 1504a for subsequent wireless transmission by the one or more antennas 1501. BT radio IC circuitry 1506b may also include a transmit signal path which may include circuitry to up-convert BT baseband signals provided by the BT baseband processing circuitry 1508b and provide BT RF output signals to the FEM circuitry 1504b for subsequent wireless transmission by the one or more antennas 1501. In the embodiment of FIG. 15, although radio IC circuitries 1506a and 1506b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 1508a-b may include a WLAN baseband processing circuitry 1508a and a BT baseband processing circuitry 1508b. The WLAN baseband processing circuitry 1508a may include a memory, such as, for example, a set of RAM arrays in a Fast Fourier Transform or Inverse Fast Fourier Transform block (not shown) of the WLAN baseband processing circuitry 1508a. Each of the WLAN baseband circuitry 1508a and the BT baseband circuitry 1508b may further include one or more processors and control logic to process the signals received from the corresponding WLAN or BT receive signal path of the radio IC circuitry 1506a-b, and to also generate corresponding WLAN or BT baseband signals for the transmit signal path of the radio IC circuitry 1506a-b. Each of the baseband processing circuitries 1508a and 1508b may further include physical layer (PHY) and medium access control layer (MAC) circuitry, and may further interface with a device for generation and processing of the baseband signals and for controlling operations of the radio IC circuitry 1506a-b.

Referring still to FIG. 15, according to the shown embodiment, WLAN-BT coexistence circuitry 1513 may include logic providing an interface between the WLAN baseband circuitry 1508a and the BT baseband circuitry 1508b to enable use cases requiring WLAN and BT coexistence. In addition, a switch 1503 may be provided between the WLAN FEM circuitry 1504a and the BT FEM circuitry 1504b to allow switching between the WLAN and BT radios according to application needs. In addition, although the antennas 1501 are depicted as being respectively connected to the WLAN FEM circuitry 1504a and the BT FEM circuitry 1504b, embodiments include within their scope the sharing of one or more antennas as between the WLAN and BT FEMs, or the provision of more than one antenna connected to each of FEM 1504a or 1504b.

In some embodiments, the front-end module circuitry 1504a-b, the radio IC circuitry 1506a-b, and baseband processing circuitry 1508a-b may be provided on a single radio card, such as wireless radio card 1502. In some other embodiments, the one or more antennas 1501, the FEM circuitry 1504a-b and the radio IC circuitry 1506a-b may be provided on a single radio card. In some other embodiments, the radio IC circuitry 1506a-b and the baseband processing circuitry 1508a-b may be provided on a single chip or integrated circuit (IC), such as IC 1512.

In some embodiments, the wireless radio card 1502 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.1 1ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 1508b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 16 illustrates WLAN FEM circuitry 1504a in accordance with some embodiments. Although the example of FIG. 16 is described in conjunction with the WLAN FEM circuitry 1504a, the example of FIG. 16 may be described in conjunction with the example BT FEM circuitry 1504b (FIG. 15), although other circuitry configurations may also be suitable.

In some embodiments, the FEM circuitry 1504a may include a TX/RX switch 1602 to switch between transmit mode and receive mode operation. The FEM circuitry 1504a may include a receive signal path and a transmit signal path. The receive signal path of the FEM circuitry 1504a may include a low-noise amplifier (LNA) 1606 to amplify received RF signals 1603 and provide the amplified received RF signals 1607 as an output (e.g., to the radio IC circuitry 1506a-b (FIG. 15)). The transmit signal path of the circuitry 1504a may include a power amplifier (PA) to amplify input RF signals 1609 (e.g., provided by the radio IC circuitry 1506a-b), and one or more filters 1612, such as bandpass filters (BPFs), low-pass filters (LPFs) or other types of filters, to generate RF signals 1615 for subsequent transmission (e.g., by one or more of the antennas 1501 (FIG. 15)) via an example duplexer 1614.

In some dual-mode embodiments for Wi-Fi communication, the FEM circuitry 1504a may be configured to operate in either the 2.4 GHz frequency spectrum or the 5 GHz frequency spectrum. In these embodiments, the receive signal path of the FEM circuitry 1504a may include a receive signal path duplexer 1604 to separate the signals from each spectrum as well as provide a separate LNA 1606 for each spectrum as shown. In these embodiments, the transmit signal path of the FEM circuitry 1504a may also include a power amplifier 1610 and a filter 1612, such as a BPF, an LPF or another type of filter for each frequency spectrum and a transmit signal path duplexer 1604 to provide the signals of one of the different spectrums onto a single transmit path for subsequent transmission by the one or more of the antennas 1501 (FIG. 15). In some embodiments, BT communications may utilize the 2.4 GHz signal paths and may utilize the same FEM circuitry 1504a as the one used for WLAN communications.

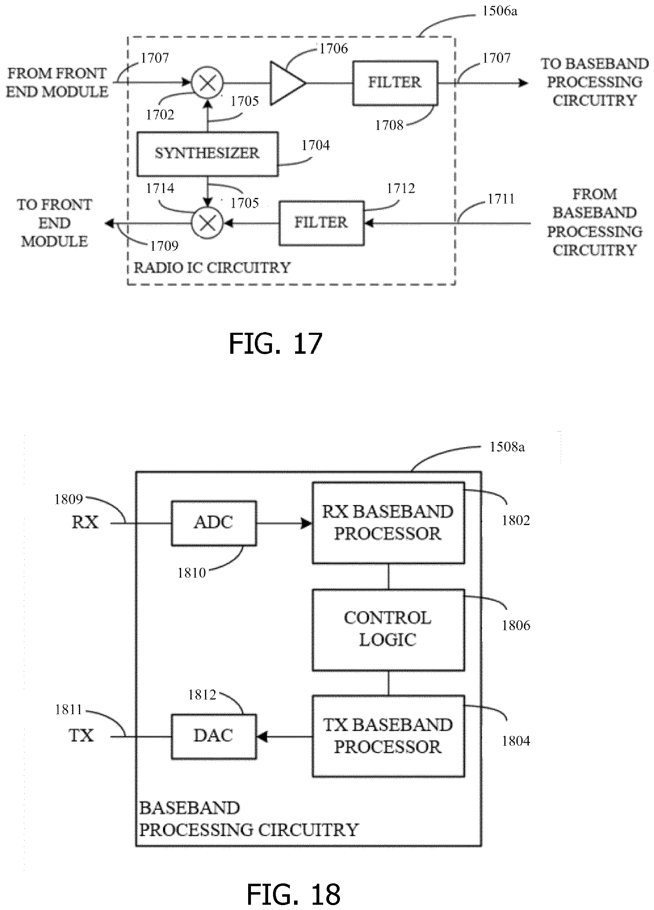

FIG. 17 illustrates radio IC circuitry 1506a in accordance with some embodiments. The radio IC circuitry 1506a is one example of circuitry that may be suitable for use as the WLAN or BT radio IC circuitry 1506a/1506b (FIG. 15), although other circuitry configurations may also be suitable. Alternatively, the example of FIG. 17 may be described in conjunction with the example BT radio IC circuitry 1506b.

In some embodiments, the radio IC circuitry 1506a may include a receive signal path and a transmit signal path. The receive signal path of the radio IC circuitry 1506a may include at least mixer circuitry 1702, such as, for example, down-conversion mixer circuitry, amplifier circuitry 1706 and filter circuitry 1708. The transmit signal path of the radio IC circuitry 1506a may include at least filter circuitry 1712 and mixer circuitry 1714, such as, for example, up-conversion mixer circuitry. Radio IC circuitry 1506a may also include synthesizer circuitry 1704 for synthesizing a frequency 1705 for use by the mixer circuitry 1702 and the mixer circuitry 1714. The mixer circuitry 1702 and/or 1714 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 17 illustrates only a simplified version of a radio IC circuitry, and may include, although not shown, embodiments where each of the depicted circuitries may include more than one component. For instance, mixer circuitry 1714 may each include one or more mixers, and filter circuitries 1708 and/or 1712 may each include one or more filters, such as one or more BPFs and/or LPFs according to application needs. For example, when mixer circuitries are of the direct-conversion type, they may each include two or more mixers.

In some embodiments, mixer circuitry 1702 may be configured to down-convert RF signals 1607 received from the FEM circuitry 1504a-b (FIG. 15) based on the synthesized frequency 1705 provided by synthesizer circuitry 1704. The amplifier circuitry 1706 may be configured to amplify the down-converted signals and the filter circuitry 1708 may include an LPF configured to remove unwanted signals from the down-converted signals to generate output baseband signals 1707. Output baseband signals 1707 may be provided to the baseband processing circuitry 1508a-b (FIG. 15) for further processing. In some embodiments, the output baseband signals 1707 may be zero-frequency baseband signals, although this is not a requirement. In some embodiments, mixer circuitry 1702 may comprise passive mixers, although the scope of the embodiments is not limited in this respect.

In some embodiments, the mixer circuitry 1714 may be configured to up-convert input baseband signals 1711 based on the synthesized frequency 1705 provided by the synthesizer circuitry 1704 to generate RF output signals 1609 for the FEM circuitry 1504a-b. The baseband signals 1711 may be provided by the baseband processing circuitry 1508a-b and may be filtered by filter circuitry 1712. The filter circuitry 1712 may include an LPF or a BPF, although the scope of the embodiments is not limited in this respect.

In some embodiments, the mixer circuitry 1702 and the mixer circuitry 1714 may each include two or more mixers and may be arranged for quadrature down-conversion and/or up-conversion respectively with the help of synthesizer 1704. In some embodiments, the mixer circuitry 1702 and the mixer circuitry 1714 may each include two or more mixers each configured for image rejection (e.g., Hartley image rejection). In some embodiments, the mixer circuitry 1702 and the mixer circuitry 1714 may be arranged for direct down-conversion and/or direct up-conversion, respectively. In some embodiments, the mixer circuitry 1702 and the mixer circuitry 1714 may be configured for super-heterodyne operation, although this is not a requirement.

Mixer circuitry 1702 may comprise, according to one embodiment: quadrature passive mixers (e.g., for the in-phase (I) and quadrature phase (Q) paths). In such an embodiment, RF input signal 1607 from FIG. 17 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1705 of synthesizer 1704 (FIG. 17). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 1607 (FIG. 16) may comprise a balanced signal, although the scope of the embodiments is not limited in this respect. The I and Q baseband output signals may be provided to low-noise amplifier, such as amplifier circuitry 1706 (FIG. 17) or to filter circuitry 1708 (FIG. 17).

In some embodiments, the output baseband signals 1707 and the input baseband signals 1711 may be analog baseband signals, although the scope of the embodiments is not limited in this respect. In some alternate embodiments, the output baseband signals 1707 and the input baseband signals 1711 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1704 may be a fractional-N synthesizer or a fractional N/N+1 synthesizer, although the scope of the embodiments is not limited in this respect as other types of frequency synthesizers may be suitable. For example, synthesizer circuitry 1704 may be a delta-sigma synthesizer, a frequency multiplier, or a synthesizer comprising a phase-locked loop with a frequency divider. According to some embodiments, the synthesizer circuitry 1704 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1704 may be provided by a voltage controlled oscillator (VCO), although that is not a requirement. A divider control input may further be provided by either the baseband processing circuitry 1508a-b (FIG. 15) depending on the desired output frequency 1705. In some embodiments, a divider control input (e.g., N) may be determined from a look-up table (e.g., within a Wi-Fi card) based on a channel number and a channel center frequency as determined or indicated by the example application processor 1510. The application processor 1510 may include, or otherwise be connected to, one of the example secure signal converter 101 or the example received signal converter 103 (e.g., depending on which device the example radio architecture is implemented in).

In some embodiments, synthesizer circuitry 1704 may be configured to generate a carrier frequency as the output frequency 1705, while in other embodiments, the output frequency 1705 may be a fraction of the carrier frequency (e.g., one-half the carrier frequency, one-third the carrier frequency). In some embodiments, the output frequency 1705 may be a LO frequency (fLO).

FIG. 18 illustrates a functional block diagram of baseband processing circuitry 1508a in accordance with some embodiments. The baseband processing circuitry 1508a is one example of circuitry that may be suitable for use as the baseband processing circuitry 1508a (FIG. 15), although other circuitry configurations may also be suitable. Alternatively, the example of FIG. 17 may be used to implement the example BT baseband processing circuitry 1508b of FIG. 15.

The baseband processing circuitry 1508a may include a receive baseband processor (RX BBP) 1802 for processing receive baseband signals 1709 provided by the radio IC circuitry 1506a-b (FIG. 15) and a transmit baseband processor (TX BBP) 1804 for generating transmit baseband signals 1711 for the radio IC circuitry 1506a-b. The baseband processing circuitry 1508a may also include control logic 1806 for coordinating the operations of the baseband processing circuitry 1508a.

In some embodiments (e.g., when analog baseband signals are exchanged between the baseband processing circuitry 1508a-b and the radio IC circuitry 1506a-b), the baseband processing circuitry 1508a may include ADC 1810 to convert analog baseband signals 1809 received from the radio IC circuitry 1506a-b to digital baseband signals for processing by the RX BBP 1802. In these embodiments, the baseband processing circuitry 1508a may also include DAC 1812 to convert digital baseband signals from the TX BBP 1804 to analog baseband signals 1811.

In some embodiments that communicate OFDM signals or OFDMA signals, such as through baseband processor 1508a, the transmit baseband processor 1804 may be configured to generate OFDM or OFDMA signals as appropriate for transmission by performing an inverse fast Fourier transform (IFFT). The receive baseband processor 1802 may be configured to process received OFDM signals or OFDMA signals by performing an FFT. In some embodiments, the receive baseband processor 1802 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 15, in some embodiments, the antennas 1501 (FIG. 15) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 1501 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (LTE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multi-standard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include a device comprising processing circuitry coupled to storage, the processing circuitry configured to: generate a frame comprising one or more fields that are encoded using an additional encoding key different from a first key used in a data management frame; and cause to send the frame to one or more STAs.

Example 2 may include the device of example 1 and/or some other example herein, wherein the one or more fields include sequence number (SN), traffic identifier (TID), power management (PM), more data, end of service period (EOSP), or high throughput (HT) control.

Example 3 may include the device of example 1 and/or some other example herein, wherein the additional encoding key may be maintained in a lower layer.

Example 4 may include the device of example 1 and/or some other example herein, further comprising a transceiver configured to transmit and receive wireless signals.

Example 5 may include the device of example 4 and/or some other example herein, further comprising an antenna coupled to the transceiver to cause to send the frame.

Example 6 may include a non-transitory computer-readable medium storing computer-executable instructions which when executed by one or more processors result in performing operations comprising: generating a frame comprising one or more fields that are encoded using an additional encoding key different from a first key used in a data management frame; and causing to send the frame to one or more STAs.

Example 7 may include the non-transitory computer-readable medium of example 6 and/or some other example herein, wherein the one or more fields include sequence number (SN), traffic identifier (TID), power management (PM), more data, end of service period (EOSP), or high throughput (HT) control.

Example 8 may include the non-transitory computer-readable medium of example 6 and/or some other example herein, wherein the additional encoding key may be maintained in a lower layer.

Example 9 may include a method comprising: generating, by one or more processors, a frame comprising one or more fields that are encoded using an additional encoding key different from a first key used in a data management frame; and causing to send the frame to one or more STAs.

Example 10 may include the method of example 9 and/or some other example herein, wherein the one or more fields include sequence number (SN), traffic identifier (TID), power management (PM), more data, end of service period (EOSP), or high throughput (HT) control.

Example 11 may include the method of example 9 and/or some other example herein, wherein the additional encoding key may be maintained in a lower layer.

Example 12 may include an apparatus comprising means for: generating a frame comprising one or more fields that are encoded using an additional encoding key different from a first key used in a data management frame; and causing to send the frame to one or more STAs.

Example 13 may include the apparatus of example 12 and/or some other example herein, wherein the one or more fields include sequence number (SN), traffic identifier (TID), power management (PM), more data, end of service period (EOSP), or high throughput (HT) control.

Example 14 may include the apparatus of example 12 and/or some other example herein, wherein the additional encoding key may be maintained in a lower layer.

Example 15 may include one or more non-transitory computer-readable media comprising instructions to cause an electronic device, upon execution of the instructions by one or more processors of the electronic device, to perform one or more elements of a method described in or related to any of examples 1-14, or any other method or process described herein.

Example 16 may include an apparatus comprising logic, modules, and/or circuitry to perform one or more elements of a method described in or related to any of examples 1-14, or any other method or process described herein.

Example 17 may include a method, technique, or process as described in or related to any of examples 1-14, or portions or parts thereof.

Example 18 may include an apparatus comprising: one or more processors and one or more computer readable media comprising instructions that, when executed by the one or more processors, cause the one or more processors to perform the method, techniques, or process as described in or related to any of examples 1-14, or portions thereof.

Example 19 may include a method of communicating in a wireless network as shown and described herein.

Example 20 may include a system for providing wireless communication as shown and described herein.

Example 21 may include a device for providing wireless communication as shown and described herein.

Example 22 may include a device, the device comprising processing circuitry coupled to storage, the processing circuitry configured to: generate a frame comprising one or more fields that are encrypted using a second encryption key different from a first encryption key used in a frame body of a data frame or a management frame; and cause to send the frame to one or more STAs.

Example 23 may include the device of example 22, wherein the one or more fields include sequence number (SN), traffic identifier (TID), power management (PM), more data, end of service period (EOSP), or high throughput (HT) control.

Example 24 may include the device of example 22 or example 23, wherein the second encryption key is maintained in a lower layer.

Example 25 may include the device of any one of examples 22 to 24, wherein the processing circuitry is configured to perform a multi-link operation and the second encryption key is negotiated for the link for a transmission of the generated frame.

Example 26 may include the device of any one of examples 22 to 25, wherein the second encryption key is negotiated with the one or more STAs. A further second encryption key may be negotiated with the one or more STAs, which the further second encryption key is used to decrypt one or more fields of received frames from the one or more STAs.

Example 27 may include the device of any one of examples 22 to 26, wherein the generated frame comprises a first packet number for the first encryption key and a second packet number for the second encryption key. A replay counter of the one or more STAs to check replay based on the second packet number.

Example 28 may include the device of any one of examples 22 to 27, wherein the first encryption key is derived from a temporal key; wherein a rekeying of the second encryption key is independent of a rekeying of the temporal key.

Example 29 may include the device of any one of examples 22 to 28, wherein the first encryption key is obtained based on an established pairwise transient key security association (PTKSA); wherein a rekeying of the second encryption key is done according to a rekeying of the established PTKSA.

Example 30 may include the device of any one of examples 22 to 29, wherein the generated frame comprises a MAC header, a header for encryption with the second encryption key, the one or more fields, a message integrity code (MIC) for the encryption with the second encryption key, an encrypted data field that is encrypted with the first encryption key, and a further message integrity code (MIC) for the encryption with the first encryption key.

Example 31 may include the device of example 30, wherein the header for encryption with the second encryption key comprises an octet representative of a key identifier (Key ID) and 6 bytes for PNs.

Example 32 may include the device of example 30 or example 31, wherein the one or more fields further comprise at least one of a retry bit, an address 3 field, a fragment number, a sequence control field, address 4 field, quality of service (QoS) control field, a counter mode (CTR) with cipher-block chaining (CBC)-message authentication code(MAC) protocol header (CCMP header) or a Galois/counter mode (GCM) protocol header (GCMP header).

Example 33 may include the device of any one of examples 30 to 32, wherein one capability bit is used to indicate a capability for the generated frame. The one capability bit may be in RSNXE to indicate the support of the generated frame using the second encryption key.

Example 34 may include the device of any one of examples 30 to 32, wherein the MAC header comprises a frame control field indicating the use of the generated frame.

Example 35 may include the device of any one of examples 22 to 34, or any other examples provided in this disclosure, wherein the same cipher suite is used for a first encryption with the first encryption key and a second encryption with the second encryption key.

Example 36 may include the device of any one of examples 22 to 35, or any other examples provided in this disclosure, wherein the second encryption key uses the same key length as the first encryption key.

Example 37 may include the device of any one of examples 22 to 36, or any other examples provided in this disclosure, wherein an AAD construction is used for the encryption using the second encryption key, wherein the AAD construction is based on at least one of a Frame Control field, an Address 1 field, and/or an Address 2 field.

Example 38 may include the device of any one of examples 22 to 37, or any other examples provided in this disclosure, wherein the one or more fields comprise at least one of: a Power Management subfield, a More Data subfield, a +HTC subfield, and/or a Retry subfield.

Example 39 may include the device of any one of examples 22 to 38, or any other examples provided in this disclosure, wherein the one or more fields comprise at least one of: a Sequence Number subfield, a Sequence Control field, and/or a Fragment Number subfield.

Example 40 may include the device of any one of examples 22 to 39, or any other examples provided in this disclosure, wherein the one or more fields comprise at least one of: a traffic identifier (TID) subfield, an end of service period (EOSP) subfield, and/or a QoS Control field.

Example 41 may include the device of any one of examples 22 to 40, or any other examples provided in this disclosure, wherein the one or more fields comprise an Address 3 field, an Address 4 field, a high throughput (HT) Control field , and/or one of a counter mode (CTR) with cipher-block chaining (CBC)-message authentication code(MAC) protocol header (CCMP header) or a Galois/counter mode (GCM) protocol header (GCMP header) for the first encryption key used in the frame body of the frame.

Example 42 may include the device of any one of examples 22 to 41, or any other examples provided in this disclosure, wherein the generated frame comprises a first packet number for the first encryption key and a second packet number for the second encryption key, the second packet number is used for the transmission to the one of more STAs, based on which a replay counter of the one or more STAs checks replay based on the second packet number.

Example 43 may include the device of any one of examples 22 to 42, or any other examples provided in this disclosure, wherein the processing circuitry is configured to perform a Nonce construction for the encryption using the second encryption key based on at least one of the second encryption key, an Address 2 field, or a CCM nonce flag when CCMP is used.

Example 44 may include the device of any one of examples 22 to 43, or any other examples provided in this disclosure, wherein the generated frame comprises a MAC header, a header for encryption with the second encryption key, and encrypted fields including the one or more fields, a message integrity code (MIC) for the encryption with the second encryption key under GCMP, an encrypted data field that is encrypted with the first encryption key, and a further message integrity code (MIC) for the encryption with the first encryption key under GCMP, and FCS.

Example 45 may include a method comprising: generating, by one or more processors, a frame comprising one or more fields that are encrypted using a second encryption key different from a first encryption key used in a frame body of a data frame or a management frame; and causing to send the frame to one or more STAs.

Example 46 may include the method of example 45, wherein the one or more fields include sequence number (SN), traffic identifier (TID), power management (PM), more data, end of service period (EOSP), or high throughput (HT) control.

Example 47 may include the method of example 45 or example 46, further comprising maintaining the second encryption key in a lower layer.

Example 48 may include the method of any one of examples 45 to 47, further comprising performing a multi-link operation and negotiating the second encryption key for the link for a transmission of the generated frame.

Example 49 may include the method of any one of examples 45 to 48, further comprising negotiating the second encryption key with the one or more STAs. A further second encryption key may be negotiated with the one or more STAs, which the further second encryption key is used to decrypt one or more fields of received frames from the one or more STAs.

Example 50 may include the method of any one of examples 45 to 49, wherein the generated frame comprises a first packet number for the first encryption key and a second packet number for the second encryption key. A replay counter of the one or more STAs to check replay based on the second packet number.

Example 51 may include the method of any one of examples 45 to 50, further comprising deriving the first encryption key from a temporal key; wherein a rekeying of the second encryption key is independent of a rekeying of the temporal key.

Example 52 may include the method of any one of examples 45 to 51, further comprising obtaining the first encryption key based on an established pairwise transient key security association (PTKSA); and rekeying of the second encryption key according to a rekeying of the established PTKSA.

Example 53 may include the method of any one of examples 45 to 52, wherein the generated frame comprises a MAC header, a header for encryption with the second encryption key, the one or more fields, a message integrity code (MIC) for the encryption with the second encryption key, an encrypted data field that is encrypted with the first encryption key, and a further message integrity code (MIC) for the encryption with the first encryption key.

Example 54 may include the method of example 53, wherein the header for encryption with the second encryption key comprises an octet representative of a key identifier (Key ID) and 6 bytes for PNs.

Example 55 may include the method of example 53 or example 54, wherein the one or more fields further comprise at least one of a retry bit, an address 4 field, a fragment number, a sequence control field, address 5 field, quality of service (QoS) control field, a counter mode (CTR) with cipher-block chaining (CBC)-message authentication code(MAC) protocol header (CCMP header) or a Galois/counter mode (GCM) protocol header (GCMP header).

Example 56 may include the method of any one of examples 53 to 55, wherein one capability bit is used to indicate a capability for the generated frame. The one capability bit may be in RSNXE to indicate the support of the generated frame using the second encryption key.

Example 57 may include the method of any one of examples 53 to 56, wherein the MAC header comprises a frame control field indicating the use of the generated frame.

Example 58 may include the method of any one of examples 45 to 57, or any other examples provided in this disclosure, wherein the same cipher suite is used for a first encryption with the first encryption key and a second encryption with the second encryption key.

Example 59 may include the method of any one of examples 45 to 58, or any other examples provided in this disclosure, wherein the second encryption key uses the same key length as the first encryption key.

Example 60 may include the method of any one of examples 45 to 59, or any other examples provided in this disclosure, wherein an AAD construction is used for the encryption using the second encryption key, wherein the AAD construction is based on at least one of a Frame Control field, an Address 1 field, and/or an Address 2 field.

Example 61 may include the method of any one of examples 45 to 60, or any other examples provided in this disclosure, wherein the one or more fields comprise at least one of: a Power Management subfield, a More Data subfield, a +HTC subfield, and/or a Retry subfield.

Example 62 may include the method of any one of examples 45 to 61, or any other examples provided in this disclosure, wherein the one or more fields comprise comprising at least one of: a Sequence Number subfield, a Sequence Control field, and/or a Fragment Number subfield.

Example 63 may include the method of any one of examples 45 to 62, or any other examples provided in this disclosure, wherein the one or more fields comprise at least one of: a traffic identifier (TID) subfield, an end of service period (EOSP) subfield, and/or a QoS Control field.

Example 64 may include the method of any one of examples 45 to 63, or any other examples provided in this disclosure, wherein the one or more fields comprise an Address 3 field, an Address 4 field, a high throughput (HT) Control field , and/or one of a counter mode (CTR) with cipher-block chaining (CBC)-message authentication code(MAC) protocol header (CCMP header) or a Galois/counter mode (GCM) protocol header (GCMP header) for the first encryption key used in the frame body of the frame.

Example 65 may include the method of any one of examples 45 to 64, or any other examples provided in this disclosure, wherein the generated frame comprises a first packet number for the first encryption key and a second packet number for the second encryption key, the second packet number is used for the transmission to the one of more STAs, based on which a replay counter of the one or more STAs checks replay based on the second packet number.

Example 66 may include the method of any one of examples 45 to 65, or any other examples provided in this disclosure, further including performing a Nonce construction for the encryption using the second encryption key based on at least one of the second encryption key, an Address 2 field, or a CCM nonce flag when CCMP is used.

Example 67 may include the method of any one of examples 45 to 66, or any other examples provided in this disclosure, wherein the generated frame comprises a MAC header, a header for encryption with the second encryption key, and encrypted fields including the one or more fields, a message integrity code (MIC) for the encryption with the second encryption key under GCMP, an encrypted data field that is encrypted with the first encryption key, and a further message integrity code (MIC) for the encryption with the first encryption key under GCMP, and FCS.

Example 68 may include a non-transitory computer-readable medium comprising computer executable instructions which, when executed by a processor, cause the processor to perform the method of any one of examples 45 to 67.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A device, the device comprising processing circuitry coupled to storage, the processing circuitry configured to:
generate a frame comprising one or more fields that are encrypted using a second encryption key different from a first encryption key used in a frame body of a data frame or a management frame; and
cause to send the frame to one or more STAs.

2. The device of claim 1, wherein the same cipher suite is used for a first encryption with the first encryption key and a second encryption with the second encryption key, and wherein the same key length is used for the first encryption key and the second encryption key.

3. The device of any one of claim 1 or claim 2, wherein an AAD construction is used for the encryption using the second encryption key, wherein the AAD construction is based on at least one of a Frame Control field, an Address 1 field, and/or an Address 2 field.

4. The device of any one of claims 1 to 3, wherein the one or more fields comprise at least one of a Power Management subfield, a More Data subfield, a +High Throughput Control (+HTC) subfield, and/or a Retry subfield.

5. The device of any one of claims 1 to 4, wherein the one or more fields comprise at least one of a Sequence Number subfield, and/or a Fragment Number subfield, or a Sequence Control field.

6. The device of any one of claims 1 to 5, wherein the one or more fields comprise at least one of a traffic identifier (TID) subfield, and/or an end of service period (EOSP) subfield or a QoS Control field.

7. The device of any one of claims 1 to 6, wherein the one or more fields comprise an Address 3 field, an Address 4 field, a high throughput (HT) Control field, and/or one of a counter mode (CTR) with cipher-block chaining (CBC)-message authentication code(MAC) protocol header (CCMP header) or a Galois/counter mode (GCM) protocol header (GCMP header) for the first encryption key used in the frame body of the frame.

8. The device of any one of claims 1 to 7,
wherein the processing circuitry is configured to perform a multi-link operation and the second encryption key is negotiated for the link for a transmission of the generated frame.

9. The device of any one of claims 1 to 8,
wherein the generated frame comprises a first packet number for the first encryption key and a second packet number for the second encryption key, the second packet number is used for the transmission to the one of more STAs, based on which a replay counter of the one or more STAs checks replay based on the second packet number.

10. The device of any one of claims 1 to 9, wherein the processing circuitry is configured to perform a Nonce construction for the encryption using the second encryption key based on at least one of the second packet number, an Address 2 field, or a CCM nonce flag when CCMP is used.

11. The device of any one of claims 1 to 10,
wherein the generated frame comprises a MAC header, a header for encryption with the second encryption key, and encrypted fields including the one or more fields, a message integrity code (MIC) for the encryption with the second encryption key under GCMP, an encrypted data field that is encrypted with the first encryption key, and a further message integrity code (MIC) for the encryption with the first encryption key under GCMP, and FCS.

12. The device of claim 11,
wherein one capability bit in robust security network exchange (RSNXE is used to indicate a capability for the support of the generated frame using the second encryption key.

13. The device of claim 11 or claim 12,
wherein the MAC header comprises a frame control field indicating the use of the generated frame.

14. A method comprising:
generating, by one or more processors, a frame comprising one or more fields that are encrypted using a second encryption key different from a first encryption key used in a frame body of a data frame or a management frame; and
causing to send the frame to one or more STAs.

15. A non-transitory computer-readable medium comprising computer executable instructions which, when executed by a processor, cause the processor to perform the method of claim 14.
